Europäisches Patentamt

European Patent Office

Office européen des brevets

(11) Publication number: **0 200 563**

A2

(12) # EUROPEAN PATENT APPLICATION

(21) Application number: **86303370.0**

(51) Int. Cl.⁴: **F 16 K 5/06**

(22) Date of filing: **02.05.86**

(30) Priority: **03.05.85 GB 8511399**

(43) Date of publication of application:
**05.11.86 Bulletin 86/45**

(84) Designated Contracting States:
**CH DE FR GB IT LI NL**

(71) Applicant: **Weir, Robert James**
**The Mill Newsham**
**Richmond North Yorkshire, DL11 7RD(GB)**

(72) Inventor: **Weir, Robert James**
**The Mill Newsham**
**Richmond North Yorkshire, DL11 7RD(GB)**

(74) Representative: **Virr, Dennis Austin et al,**
**Urquhart-Dykes & Lord Floor B Milburn House Dean Street**
**Newcastle upon Tyne NE1 1LE(GB)**

(54) Process line valve.

(57) A fluid-flow valve suitable for isolating or controlling the flow of fluid in a process line comprises a valve body (8) having a fluid-flow passage (9) therethrough, a valve member (5) movable to modify the flow of fluid through the passage and an access channel (15, 19, 20, 24, 28, 29) in the valve permitting monitoring of a characteristic (for example temperature, pressure or flow-rate) of fluid flowing through the fluid-flow passage.

Fig. 1

EP 0 200 563 A2

Croydon Printing Company Ltd.

PROCESS LINE VALVE

The present invention is a novel valve suitable for isolating or controlling the flow of a fluid in a process line.

Line valves are used in large numbers to control the flow of a wide variety of fluids in production plant of many kinds, including chemical and petrochemical plant and oil and gas production plant. Thus such valves are used, among other purposes, for isolating particular items of plant equipment and for varying the rate of flow of the fluid at particular points in the production line.

In the same production operations, it is usually necessary to monitor one or more variables associated with the process fluid flowing through the valve, for

example its pressure, temperature or flow rate. Such monitoring is carried out using one of the range of instruments appropriate for the purpose, a measurement pocket being installed in the line or the relevant length of process line being breached to allow instrument access. However, if the instrument is put in direct communication with the process fluid by breaching of the line, it becomes necessary to instal one or more instrument isolation valves in order to permit servicing or checking of the instrument safely and without the risk of escape of process fluid.

It is an object of the present invention to provide a novel piece of process equipment by means of which the need for separate isolation of the instrument from the process fluid may in many cases be avoided.

The equipment according to the invention is a fluid-flow valve comprising a valve body having a fluid-flow passage therethrough, a valve member movable to modify the flow of fluid through said passage and an access channel in said valve permitting monitoring of a characteristic of fluid flowing through said fluid-flow passage.

By using the valve according to the present invention, it becomes possible to dispense with the measurement pocket or instrument isolation valve or valves which would often otherwise be necessary to permit instrument servicing, in that the process line valve itself is able to fulfil that function. Thus the cost of the instrument isolation pocket, valve or valves and also the costs associated with installing and maintaining them are saved.

The control valve, in its flow-controlling aspect, may be of many possible types, resembling similar conventional fluid-flow valves. For example, the valve may be one wherein the valve member moves linearly towards and away from a valve seat or one wherein the action of the valve member is a rotary action. Thus the valve may be of the axially -operating piston type or a ball valve or a butterfly valve.

In the case where the valve comprises a rotary valve member, the access channel may conveniently be located at the axis of rotation of the valve member, for example within a shaft upon which the valve member is mounted for rotation or aligned with such a shaft.

Thus one form of the valve according to the present invention comprises a valve body having therein a fluid inlet and a fluid outlet and a fluid-flow passage between said inlet and outlet, a valve member mounted within said valve body upon a shaft for angular movement about said shaft as axis between at least one position wherein fluid may flow through said passage and a position wherein said passage is closed by said valve member, and a channel located at the axis of rotation of said valve member to permit monitoring of a characteristic of fluid within said passage. In this form of the invention, the valve member is preferably rounded, that is either disc-shaped (as in the case of a butterfly valve) or generally spherical or part-spherical (as in the case of a ball-valve).

A preferred form of the valve according to the present invention of the ball-valve type comprises a generally spherical or part-spherical valve member mounted upon a shaft for angular movement about the shaft as axis, the valve member having a fluid flow passage therethrough generally perpendicular to said axis, and a valve body surrounding said valve member and having therein a fluid inlet and a fluid outlet in mutual axial alignment and so disposed that angular movement of the valve member permits it to adopt a first position in which the fluid flow passage therein is aligned with said inlet and outlet and a second position in which the valve member prevents fluid communication between said inlet and outlet, and wherein there is provided in said shaft a channel to permit monitoring of a process variable in fluid flowing through said fluid flow passage. Ball-valves according to the present invention may be of the type wherein, when the valve member is in the closed position, a fluid-fast seal is made at both the inlet and the outlet, or alternatively of the type wherein a seal is made at only one of those points.  In general, it is preferred that the process line valve according to the invention be of the former, double-seat type but a single-seat form of the valve is suitable for use in selected situations, for example when the fluid-fast seal is on the downstream side of the valve member and the fluid passed is non-toxic, or if a suitable restriction or self-sealing provision is made in the monitoring channel.

The form of the monitoring channel and the number of such channels depends upon the process variable or variables being monitored and the manner of monitoring selected.  Thus, where the fluid pressure is to be directly monitored at the instrument, then the channel will be in open communication with the process fluid, that is the channel will extend into the fluid flow passage in the valve.  On the other hand, if the variable to be measured is the temperature of the fluid, then the channel may be a blind bore forming a pocket or thermowell leading towards, but not into, the fluid flow passage to receive a thermocouple or other temperature probe therein.

Advantageously more than one process variable may be monitored in the fluid flowing through the valve.  For example, both the pressure and the temperature of the fluid may be measured.  In such a case, it is convenient to measure one variable (for example

temperature) via a "blind" channel located in the shaft supporting a rotary valve member and another variable (for example pressure or flow rate) via a second channel which penetrates into the fluid-flow passage of the valve.

The process line valve according to the present invention is particularly useful when it is desired to monitor the fluid flow rate through the line. In this case two or three instrument isolation valves may normally be required for each instrument and may, by means of the invention, be dispensed with. Thus, for example, when the flow rate is to be determined by differential pressure measurement across an orifice plate or other flow restriction (for example a venturi or nozzle), it is necessary to have instrument access to the process line at two points, upstream and downstream of the restriction. When using the process line valve according to the invention for this purpose, it is merely necessary to provide a second access channel, for example within the valve shaft.

The valve of the present invention may also be designed to accommodate fluid flow rate measurement by the vortex method. As is well known, this method entails creating a vortex by locating a bluff shedding body in the fluid stream and measuring the frequency of the vortex produced downstream of the body, using an appropriate sensor for the purpose. With the present invention, the shedding body may be located either in the valve inlet, that is upstream of the valve member, or in the flow passage within the valve member itself, for instance in the entrance to that passage. In either case, the sensor may be located within the passage in the valve member, electrical connection between the sensor and the frequency measuring instrument being via a channel in the valve shaft or downstream of the valve seal in the valve outlet.

The process line valve is also suitable for use when an electromagnetic method is to be used to determine the fluid flow rate. Basically, this method involves measuring the voltage induced between a pair of spaced electrodes by a conductive fluid flowing between them and subjected to a magnetic field. For this purpose, an "insertion type" electromagnetic flowmeter may be disposed within the access channel, for example in alignment with the shaft of a ball-type valve member and disposed on the opposite side of the valve member from the shaft. In another form of the invention, a pair of electrically insulated electrodes may be disposed on diametrically opposite sides of a fluid passage within the valve, preferably by mounting them in a tube of insulating material disposed coaxially within the fluid flow passage. Electrical connection between at least one of the electrodes and the associated measuring instrument may be via the channel in the valve shaft. If desired the connection for both electrodes may be via said channel or via two parallel such channels. Alternatively, a second channel affording connection to the second electrode may be provided on the side of the valve member opposite to the shaft, for example in a trunnion aligned with the valve shaft.

In yet another form of the invention, the rate of flow of the fluid through the valve may be monitored by means of a turbine-type flow meter, which may if desired be an insertion turbine meter.

The invention will now be further described, by way of example only, with reference to the accompanying drawings, wherein:-

Fig 1 illustrates in vertical section a first embodiment of process line valve according to the present invention, as designed to enable measurement of process fluid temperature;

Fig 2 illustrates in vertical section a second embodiment, with provision for differential pressure measurement of the rate of flow of process fluid though the valve;

Fig 3 illustrates in vertical section a third embodiment, designed to enable flow rate determination by the vortex method;

Fig 4 illustrates in vertical section a fourth embodiment, affording flow rate measurement by an electromagnetic method; and

Fig 5 illustrates in vertical section a fifth embodiment, affording flow rate measurement by an alternative electromagnetic method and also measuring fluid pressure.

In the five figures of the drawings, corresponding parts of the five valves illustrated are identified by the same reference numerals.

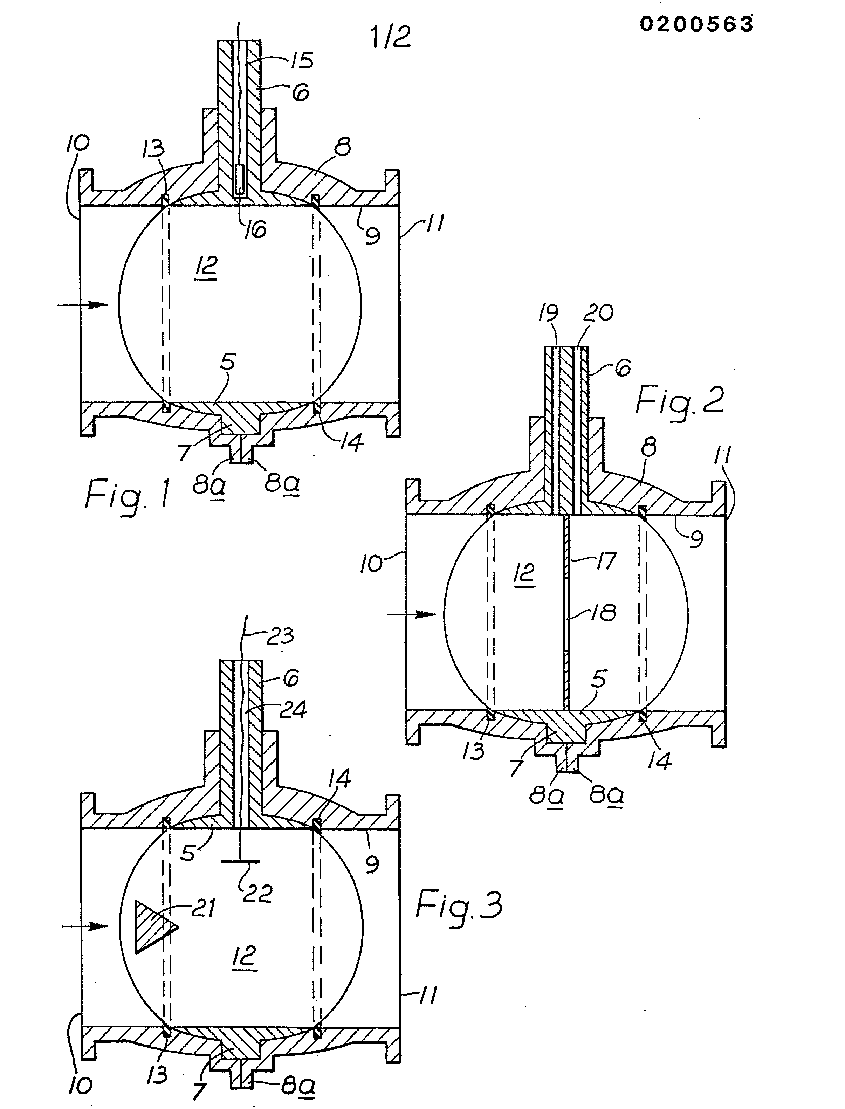

Referring firstly to Fig 1, a valve member 5 is of flattened generally spherical shape and is formed integral with a cylindrical shaft 6 and opposed trunnion 7. The valve member is mounted in a close fitting valve casing 8 for rotation through at least ninety degrees about the shaft 6 and trunnion 7 as axis. The casing 8 is assembled in two similar parts, bolted together around the valve member by flanges 8a. The valve casing has a cylindrical fluid flow passage 9 connecting an inlet 10 and outlet 11. A corresponding fluid flow passage 12 in the valve member 5 may, by rotation of the valve member, be either aligned with the passage 9 or set at right angles thereto, in which latter position the valve member 5 seats against annular seals 13 and 14 in the inlet and outlet passages respectively, and thereby prevents flow of fluid through the valve.

In the shaft 6 of the valve illustrated in Fig 1 there is provided an axial channel 15, which extends as far as the valve member 5 and a short distance into it but does not penetrate to the passage 12. Within the channel 15 is located a probe 16 for monitoring the temperature of fluid flowing through the passage 12.

Referring now to Fig 2, an orifice plate 17 with a central orifice 18 is disposed transversely across the passage 12 to form a restriction in the fluid flow path. The pressure upstream of the orifice plate 17 is monitored via a channel 19 in the shaft 6 and the pressure downstream of the plate 17 is monitored via a second channel 20 in the shaft. The flow rate of fluid through the valve is determined in the conventional manner by observing the difference between the respective pressure values.

The valve illustrated in Fig 3 is intended to permit determination of the flow rate of fluid through the valve using the vortex method. A shedding body 21 is located within the passage 12 near to the upstream end thereof and creates a so-called "vortex street" downstream thereof of which the frequency is an indication of fluid flow rate. That frequency is measured by means of a sensor 22 electrically connected to a frequency meter (not shown) via a line 23 passing through an axial channel 24 in the shaft 6.

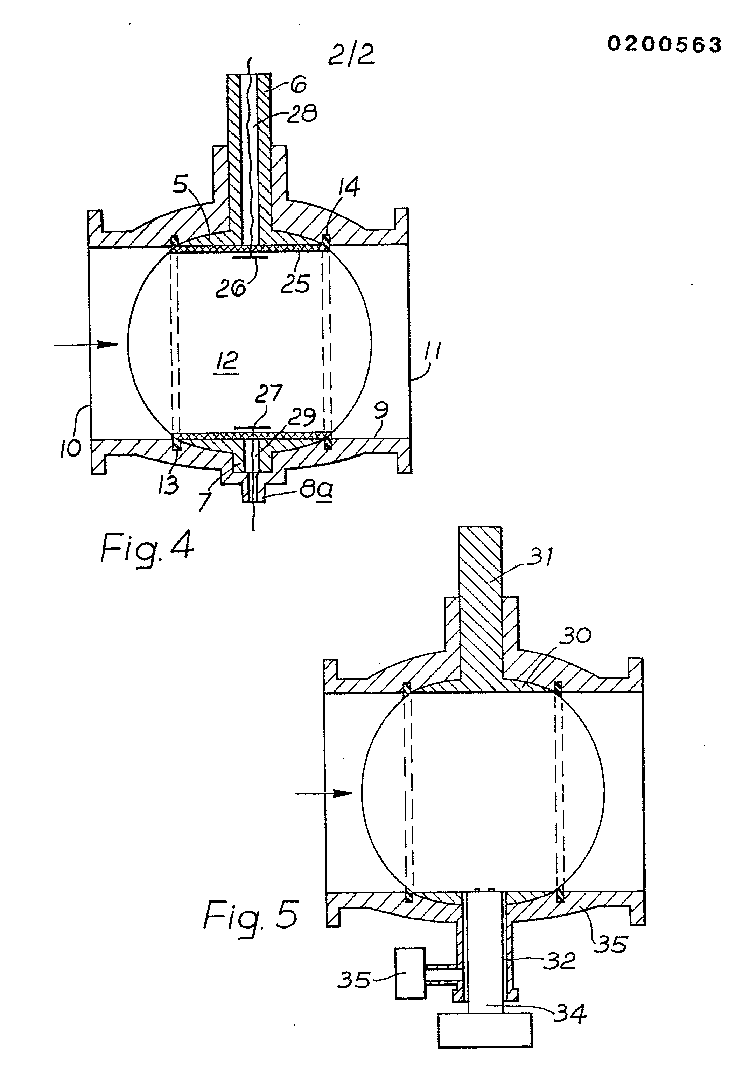

Referring now to Fig 4, the passage 12 in the valve member 5 is lined with a tube 25 of electrically insulating material coaxial therewith. Fluid flowing through the passage 12 in the direction of the arrow is subjected to the influence of a magnetic field running in a direction perpendicular to the plane of the electrodes and a voltage is thereby induced in the fluid between the electrodes. The induced voltage is measured by two diametrically opposed electrodes 26, 27 and the flow rate is thereby determined. Electrical connection to the electrode 26 is via a channel 28 in the shaft 6 and to the electrode 27 is via a channel 29 in the trunnion 7.

Referring finally to Fig 5, the valve member 30 is mounted upon a solid shaft 31, with which it is integral or to which it is keyed for rotation. In a channel 32 in the valve body 33, in alignment with the shaft 31, is located an insertion magnetic flowmeter 34, by means of which the rate of flow of fluid through the valve member is determined. A pressure meter 35 on a side-branch of the channel 32 monitors the fluid pressure.

As will be understood, the process line valve according to the present invention has the merit of combining the functions of conventional valve and access point for monitoring process fluid variables. However it also has the important advantage that, with the valve member in the closed position, the necessary associated measuring instrument is automatically isolated from the fluid source and may be disconnected, replaced or serviced in safety and without loss of process fluid.

CLAIMS

1. A fluid-flow valve comprising a valve body having a fluid-flow passage therethrough and a valve member movable to modify the flow of liquid through said passage, characterised by an access channel in said valve permitting monitoring of a characteristic of fluid flowing through said fluid-flow passage.

2. A fluid-flow valve according to claim 1, characterised in that the movement of the valve member is a linear movement towards and away from a valve seat.

3. A fluid-flow valve according to claim 2, characterised in that the valve is of the axially-operating piston type.

4. A fluid-flow valve according to claim 1, characterised in that the movement of the valve member is a rotary movement.

5. A fluid-flow valve according to claim 4, characterised in that the valve is a ball-valve or butterfly valve.

6. A fluid-flow valve according to claim 4 or claim 5, characterised in that the access channel is located at the axis of rotation of the valve member.

7.  A fluid-flow valve according to claim 6, characterised in that the valve member is mounted upon a shaft for rotation and the access channel is located within the shaft or aligned with the shaft.

8.  A fluid-flow valve according to any of claims 5 to 7, characterised in that the valve member is generally spherical or part-spherical and has a fluid-flow passage therethrough generally perpendicular to its axis of rotation, and wherein the valve member has an access channel to permit monitoring of a process variable in fluid within said passage.

9.  A fluid-flow valve according to any of the preceding claims, characterised in that the access channel is in open communication with the fluid-flow passage.

10. A fluid-flow valve according to any of claims 1 to 8 characterised in that the access channel is "blind" in that it extends towards the fluid-flow passage but does not open into it.

11. A fluid-flow valve according to any of the preceding claims characterised by means to measure the temperature, the pressure and/or the rate of flow of fluid in said passage, said means being located within said passage or in communication therewith.

12. A fluid-flow valve according to claim 11, characterised by having two or more such measuring means.

0200563

Fig. 1

Fig. 2

Fig. 3

Fig. 4

Fig. 5